# EUROPEAN PATENT APPLICATION

(11) **EP 3 327 888 A1**
(43) Date of publication of application: **30.05.2018**
(21) Application number: 16200588.8
(22) Date of filing: 24.11.2016
(51) Int. Cl.: H02J 7/00

(54) **EXPANDABLE PORTABLE POWER SOURCE**

(71) Applicant: TTI (Macao Commercial Offshore) Limited, Macao (MO)
(72) Inventor: Fauteux, Denis Gaston, Kwai Chung (HK); Lee, Hei Man Raymond, Kwai Chung (HK); Rickey, Todd, Kwai Chung (HK)
(74) Representative: Stevenson-Hill, Jack Patrick

(57) **Abstract**

An electric battery charger has a base unit, a charging cradle removably-affixed to the base unit, and an electric battery removably-affixed to the charging cradle. From about 2 charging cradles to about 16 charging cradles, or from about 2 to about 12 charging cradles, or from about 2 charging cradles to about 8 charging cradles, or from about 3 charging cradles to about 4 charging cradles, may be attached to the base unit. A method of customizing such an electric battery charger is also provided herein.

## Description

### FIELD OF THE INVENTION

The present invention relates to a portable power source. More specifically, the present invention relates to a portable power source which may be expandable.

### BACKGROUND

Portable power sources such as generators, and electric battery chargers are known that may charge single batteries, or multiple batteries at the same time. Typically these chargers contain multiple, identical charging slots which the batteries then fit or slide into. A series of charging contacts then interact, either directly or indirectly, with the battery contacts to pass electrical current into the battery to charge it. Power sources known in the art include AC/DC converters, DC/DC sources, gasoline-powered generators, propane-powered generators, solar-powered generators, inverters, hybrid power sources, etc.

While these power sources may possess circuit breakers or fuses to prevent overheating, they typically do not contain sophisticated control mechanisms or circuitry therein. However, with the advancement of battery technologies, and the increasing sophistication of modern batteries, it has now been found that such battery chargers are insufficient. Specifically, it has been found that as a user accumulates more and more devices, the need for charging may grow - for example, from the need to charge a single battery at a time, to the need to simultaneously charge three or four batteries/

Accordingly, it has now been found that there is a need for more sophisticated power sources, and especially electric battery chargers. It has also been found that there is a need for power sources, and especially electric battery chargers that are able to charge multiple batteries simultaneously. It has also been found that there is a need for a power source, and especially an expandable battery charger that allows the charging of additional batteries over time.

### SUMMARY OF THE INVENTION

An embodiment of the present invention relates to an electric battery charger having a base unit, a charging cradle removably-affixed to the base unit, and an electric battery removably-affixed to the charging cradle. From about 2 charging cradles to about 16 charging cradles, or from about 2 to about 12 charging cradles, or from about 2 charging cradles to about 8 charging cradles, or from about 3 charging cradles to about 4 charging cradles, may be attached to the base unit.

Without intending to be limited by theory it is believed that such an electric battery charger, or a power source containing such an electric battery charger, provides flexibility and a heretobefore unprecedented level of customization for the user. Such an electric battery charger, or a power source containing such an electric battery charger, also allows the user to only bring as much equipment as needed for each location. However, if additional battery charging is needed, then the user may expand the electric battery charger, or a power source containing such an electric battery charger, by adding additional charging cradles. This is especially useful when only a limited number of power outlets or space is available.

The present invention also relates to a method of customizing an electric battery charger comprising the steps of providing a base unit, providing a charging cradle, providing an electric battery, removably-affixing the charging cradle to the base unit, and removably-affixing the electric battery to the charging cradle. The charging cradle may be removably-affixed to the base unit before, after, or substantially simultaneously with removably-affixing the electric battery to the charging cradle.

Without intending to be limited by theory it is believed that such a method provides the user with flexibility to customize the electric battery charger to the immediate needs, space, etc. Furthermore, such a method may allow the user to optimize the system for the user's immediate needs.

### BRIEF DESCRIPTION OF THE DRAWINGS

Fig. 1 shows a top perspective view of embodiment of the present invention;
Fig. 2 shows a partially cut-away top perspective view of an embodiment of the invention;
Fig. 3 shows a partially cut-away top perspective view of an embodiment of the invention;
Fig. 4 shows a top perspective view of a generator-type embodiment of the invention;
Fig. 5 shows a circuit diagram of an inverter-type power source embodiment of the invention;
Fig. 6 shows a partial circuit diagram of an electric battery charger of the present invention; and
Fig. 7 shows a partially cut-away top perspective view of an embodiment of the invention.

The figures herein are for illustrative purposes only and are not necessarily drawn to scale.

### DESCRIPTION OF THE PREFERRED EMBODIMENTS

Unless otherwise specifically provided, all tests herein are conducted at standard conditions which include a room and testing temperature of 25 °C, sea level (1 atm.) pressure, pH 7, and all measurements are made in metric units. Furthermore, all percentages, ratios, etc. herein are by weight, unless specifically indicated otherwise.

The present invention is related to an electric battery charger having a base unit, a charging cradle, and an electric battery. The charging cradle is removably-affixed to the base unit, and the electric battery is removably-affixed to the charging cradle. From about 2 charging cradles to about 16 charging cradles; or from about 2 to about 12 charging cradles; or from about 2 charging cradles to about 8 charging cradles; or from about 3 charging cradles to about 4 charging cradles, may be attached to the base unit.

Without intending to be limited by theory, it is believed that the present invention allows the user to customize the electric battery charger to the number of charging cradles needed. The present invention also allows the user to start with a single charging cradle and then expand as the user's needs expand, without having to purchase a new electric battery charger, but to instead merely connect another charging cradle. This allows the simultaneous charging of multiple electric batteries with the same base unit. Furthermore, as the base unit is specifically designed with such an arrangement in mind, it is believed that this represents a far safer way to charge multiple electric batteries than simply connecting multiple chargers either in series or in parallel to a single outlet. It is believed that such a design is efficient, as the most expensive and complex portion of the battery charger is the base unit, to which additional charging cradles may be easily and cheaply added as needed.

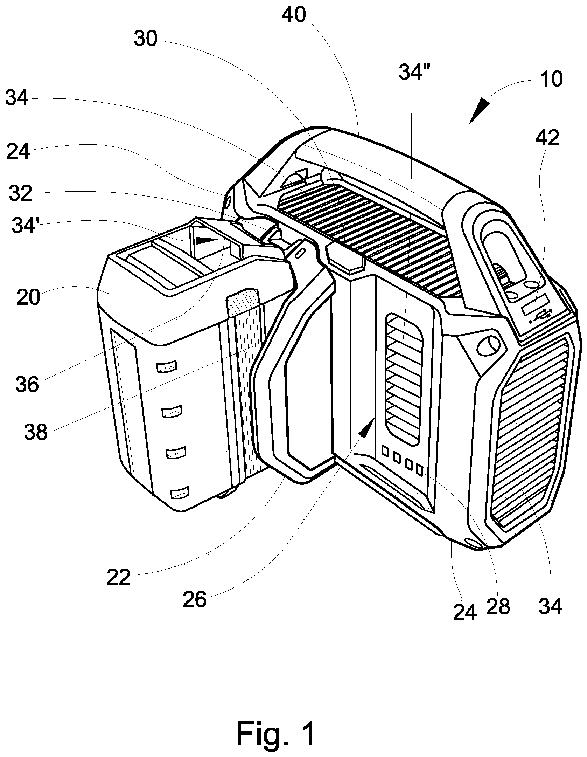

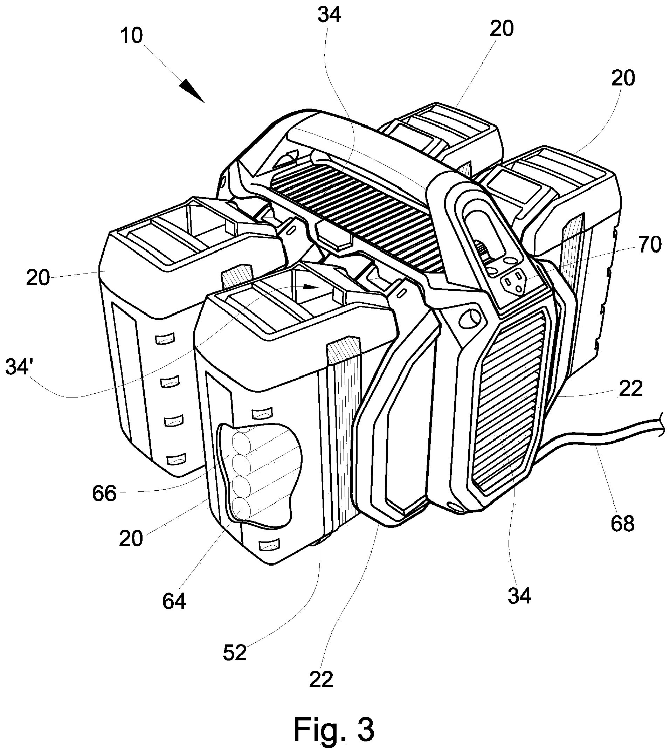

Turning to the figures, Fig. 1, shows a perspective view of an embodiment of an electric battery charger, 10, which is used to charge one or more electric batteries, 20. The electric battery useful herein is a rechargeable electric battery such as those known in the art. Examples of the electric battery useful herein include a lead-acid battery, a nickel-cadmium battery, a nickel-metal hydride battery, a lithium-ion battery, a lithium-polymer battery, an ultrabattery (e.g., as developed by CSIRO), a potassium-ion battery, a sodium-ion battery, an oxide semiconductor, a magnesium battery, an aluminium-ion battery, and a combination thereof; or a lithium-ion battery, a lithium -polymer battery, and a combination thereof. Other battery chemistries known or to be developed in the art may also useful herein. In an embodiment herein, the electric battery is an electric battery pack containing a plurality of battery cells (See Fig. 3 at 64) therein.

In an embodiment herein the electric battery is a smart electric battery. Such smart electric batteries are well-known in the art.

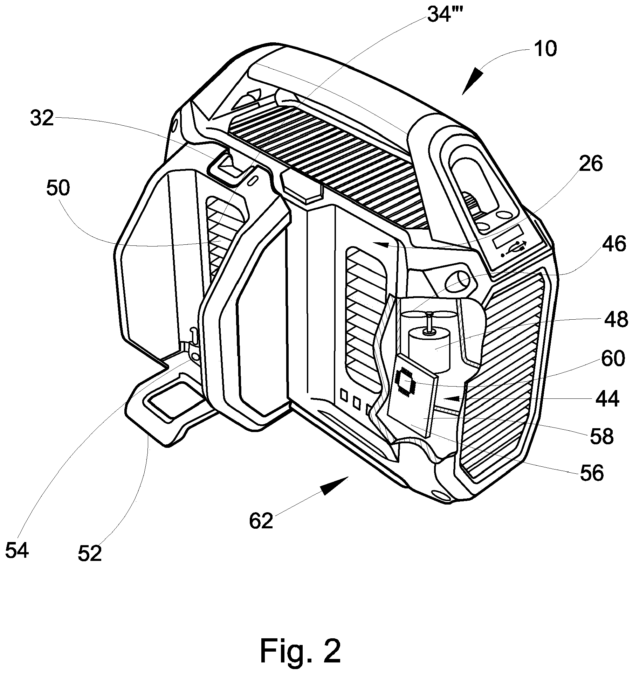

The electric battery, 20, is removably-affixed to a charging cradle, 22. The charging cradle, 22, secures the battery to prevent it from moving during charging. The charging cradle, 22, also contains a cradle electrical contact (see Fig. 2 at 54) which connects to a corresponding battery electrical contact on the battery to charge the electrical battery. However, in an embodiment herein, a contactless charging system is provided, where the charging cradle and/or the electrical battery does not contain an electrical contact, but instead charges via a contactless system such as, for example, induction charging. In such an embodiment, the charging cradle's, 22, primary function is to hold the electric battery, 20, in place. The cradle is typically made of a tough, durable material such as a plastic, a resin, rubber, metal, and a combination thereof. In an embodiment herein the plastic is a high-impact plastic. In an embodiment herein the metal is selected from aluminium, steel, copper and a combination thereof.

The charging cradle, 22, is in turn removably-affixed to a base unit, 24. The base unit, 24, contains a cradle recess, 26, into which the charging cradle, 22, removably-affixes. The base unit, 24, in Fig. 1 is symmetrical and contains 4 cradle recesses, 26, 2 cradle recesses, 26, being on each side of the base unit, 24. Each cradle recess, 26, will typically hold 1 charging cradle, 22. In an embodiment, the charging cradle useful herein may contain a single electric battery; or simultaneously a plurality of electric batteries.

In Fig. 1, the cradle recess, 26, contains a plurality of recess electrical contacts, 28, which provide an electrical connection between the base unit, 24, and the charging cradle, 22. Such an electrical connection may be used to transfer, for example, electrical power, data, etc. between the electric battery, 20, and the base unit, 24.

In Fig. 1, the electric battery, 20, is removably-affixed to the charging cradle, 22. Accordingly, a button, 30, located on the base unit, 24, may be pushed to release the charging cradle, 22, from the cradle recess, 26, in the base unit, 24. The button, 30, typically activates a latch (not shown) in the cradle recess, 26, which then releases the charging cradle, 22, and allows it to be removed. As a safety measure, when depressed, the button, 30, may be operatively-connected so as to interact with the control circuit (see Fig. 2 at 58) to first stop any connected electric battery from charging, before physically disconnecting the charging cradle, 22, and the base unit, 24.

Furthermore, in Fig. 1, the charging cradle, 22, contains a latch, 32, which locks the electric battery, 20, into the charging cradle, 22. When the latch, 32, is depressed, it releases the electric battery, 20, from the charging cradle, thereby breaking the electric circuit and stopping the charging of the electric battery, 20. As a safety measure, the when depressed, the latch, 32, may be operatively-connected so as to interact with the control circuit (see Fig. 2 at 58) to first stop the connected electric battery from charging, before allowing the electric battery, 20, to be physically disconnected from the charging cradle, 22. In an embodiment herein, a latch removably-affixes the charging cradle to the base unit. In another embodiment, a latch removably-affixes the charging cradle to the electric battery.

In Fig. 1, a plurality of vents, 34, are shown which allow air to flow in and about the electric battery charger, 10. Specifically, in this embodiment, the vents, 34, are part of an airflow path that includes portions of the base unit, 24, the charging cradle, 22, and the electric battery, 20. A battery vent, 34', can be seen underneath a battery handle, 36. An airflow pathway includes the vents, 34, 34', and 34", as well as an optional fan (see Fig. 2 at 46), which may either draw, push, or otherwise move air through the airflow pathway. Without intending to be limited by theory, it is believed that air circulation though the airflow pathway provides improved cooling for the electric battery which is especially important during charging of the electric battery. Without intending to be limited by theory, it is believed that keeping the electric battery cooler during the charging process improves the battery life as well as the battery performance over time. An additional benefit of having such improved cooling may also be longer life for the electric battery charger and its components.

In an embodiment herein, the airflow pathway starts at the battery vent, 34', passes through the electric battery, 20, through a cradle recess vent, 34", into the base unit, 24, past a fan (see Fig. 2 at 46), and out of the base unit, 24 via a vent, 34.

In Fig. 1, the electric battery, 20, also contains a battery grip, 38, which may be formed of, for example, a ridged material, rubber, etc. which makes the electric battery, 20, easier to hold.

The base unit, 24, further contains a base unit handle, 40, as well as a USB port, 42. In an embodiment herein, the electric battery charger contains a USB port; or from about 1 USB port to about 14 USB ports; or from about 2 USB ports to about 10 USB ports; or from about 3 USB ports to about 7 USB ports. These USB ports may be provided to allow the user to charge, for example, an additional tool, a personal digital assistant, a phone, a light, a fan, and a combination thereof.

Fig. 2, shows a partially-cut-away perspective view of an embodiment of the electric battery charger, 10, with a charging cradle, 22, attached to a cradle recess, 26. The charging cradle, 22, lacks an electric battery affixed thereto, and thus a cradle vent, 34"', is visible in the charging cradle, 22. The cradle vent, 34"', is part of an airflow pathway which in Fig. 2 includes a base unit airflow pathway, 44, including a fan, 46, which is turned by a motor, 48. The turning of the fan, 46, by the motor, 48, controls the speed at which air moves through the airflow pathway, 44. As air flows through the airflow pathway, 44, it cools, for example, the electrical battery, the electrical battery charger, etc. In an embodiment herein, the base unit, 24, contains the base unit airflow pathway, 44. The base unit airflow pathway, 44, contains the fan, 46, and when the fan, 46, is operating, the fan, 46, moves air though the base unit airflow pathway, 44. The charging cradle, 22, also contains a cradle vent, 34"', which is part of a cradle airflow pathway, 50. The cradle airflow pathway, 50, operatively-connects to the base unit airflow pathway, 44, and thus when the fan, 46, is operating, it also moves air through the cradle airflow pathway, 50.

The charging cradle, 22, also contains a latch, 32 to release the electrical battery (see Fig. 1 at 20), a cradle foot, 52, for stability, as well as a cradle electrical contact, 54, which is operatively-connected to the electrical battery (see Fig. 1 at 20), when it is affixed to the charging cradle, 22. Without intending to be limited by theory, it is believed that the cradle foot allows the electric battery charger to be stably-placed on a flat space during use, regardless of whether the number of batteries is even, and/or regardless of which charging recess locations are used. In an embodiment herein, the charging current flows from the cradle electrical contact to the electrical battery via direct electrical contact to charge the electrical battery.

The base unit, 24, also contains a printed circuit board (PCB), 56, which is the control circuit, 58, for the electric battery charger, 10. The control circuit, 58, controls important aspects of the electric battery charger, 10, and may, for example, regulate the voltage used to charge the electric battery, regulate the speed at which the electric battery is charged, regulate the beginning and the end of charging the electric battery, regulate the fan speed, regulate an emergency shut off, regulate the motor speed, regulate the wireless communication module, monitor the voltage used, monitor the temperature of each electric battery, monitor the temperature of the base unit, monitor the voltage used by a USB port, monitor the condition of the electric battery, monitor the electric battery for damage, monitor the connection between the battery and the charging cradle, monitor the connection between the charging cradle and the base unit, monitor the connection between the charging cradle and the cradle recess, monitor the condition of the latch, monitor the condition of the button, and/or a combination thereof.

Fig. 2 also shows a wireless communication chip, 60, located on the PCB, 54, which allows the electric battery charger, 10, to wirelessly communicate with the user, a remote location, another device, etc. Thus, in an embodiment herein, the electric battery charger, 10, contains a wireless communication device, 62. The wireless communication chip may be both a receive and a transmitter, and may communicate via, for example, Wi-Fi, Bluetooth™, 3G, 4G, LTE, and/or other wireless communication protocols as desired. Such a feature may be desirable, for example, so that a signal and/or message may be sent to a user, location and/or another device to indicate that the electric battery is fully charged, that there is a problem, that the electric battery charger requires attention, etc.

Fig. 3 shows a partially-cut-away perspective view of an embodiment of the electric battery charger, 10. The base unit, 24, has 4 charging cradles, 22, two on each side of the symmetrical base unit, 24. Each charging cradle, 22, contains a single electric battery, 20. The cut-away window in the electric battery, 20, shows a plurality of internal battery cells, 64, which form part of the electric battery, 20. In an embodiment herein, the electric battery contains form about 1 to about 50 battery cells; or from about 2 to about 40 battery cells; or from about 3 to about 30 battery cells, typically arranged in series.

A cradle foot, 52, is shown which improves the stability of the electric battery charger, 10, when the electric batteries, 20, are removably-affixed to the charging cradles, 22. As electric batteries are typically quite heavy, such a cradle foot is especially preferred as otherwise the electrical battery charger may become unbalanced, tip over, and/or fall over.

Also shown in Fig. 3 is part of the battery airflow pathway, 66, which helps air flow from the battery vent, 34', through the electric battery, 20, and to the cradle airflow pathway (see Fig. 2 at 50) so as to cool the electric battery, 20, and the entire electric battery charger, 10. The air drawn through the airflow pathway would eventually exit via the vent, 34 as heated air.

Fig. 3 also shows a power cord, 68, through which the electric battery charger, 10, draws its power. Such a power cord is operatively-connected to a power source, which may be, for example, an electrical outlet connected to the local power grid, an electrical generator, another electrical battery charger, an inverter generator, etc. The power cord will typically be operatively-connected to an AC power source, but alternatively may be connected to a DC power source. The power cord is standard in the art and typically terminates in a standard electrical plug. The standard electrical plug varies from country to country and/or geography to geography. However, the electrical plugs are nonetheless relatively standard within a single country/geography. See, for example: http://www.worldstandards.eu/electricity/plugs-and-sockets/.

Also shown in this embodiment is an electrical outlet, 70, which may provide either AC or DC power, as desired. The electrical outlet allows multiple electric battery chargers, 10, to be connected in series, as desired. This electrical outlet, 70, will typically match up with the electrical plug (not shown) at the end of the electrical cord, 68. Again, see http://www.worldstandards.eu/electricity/plugs-and-sockets/.

In the method of use herein, a method for customizing an electric battery charger is provided wherein a base unit, an electric battery and a charging cradle are provided. The charging cradle is removably-affixed to the base unit, and the electric battery is removably-affixed to the charging cradle The charging cradle may be removably-affixed to the base unit before, after or substantially simultaneously with the electric battery being removably-affixed to the charging cradle. In an embodiment herein, the charging cradle is removably-affixed to the base unit before the electric battery is removably-affixed to the charging cradle.

In an embodiment of the method herein, a plurality of charging cradles are removably-affixed to the base unit. In an embodiment herein, each charging cradle is removably-affixed to an electric battery.

In an embodiment herein, the electric battery charger is combined with a power source; or a portable power source. The power source herein includes a power source which may perform a power conversion such as AC to DC power conversion, AC to AC power conversion, DC to AC power conversion, DC to DC power conversion and a combination thereof.

In an embodiment herein, the power source comprises an inverter.

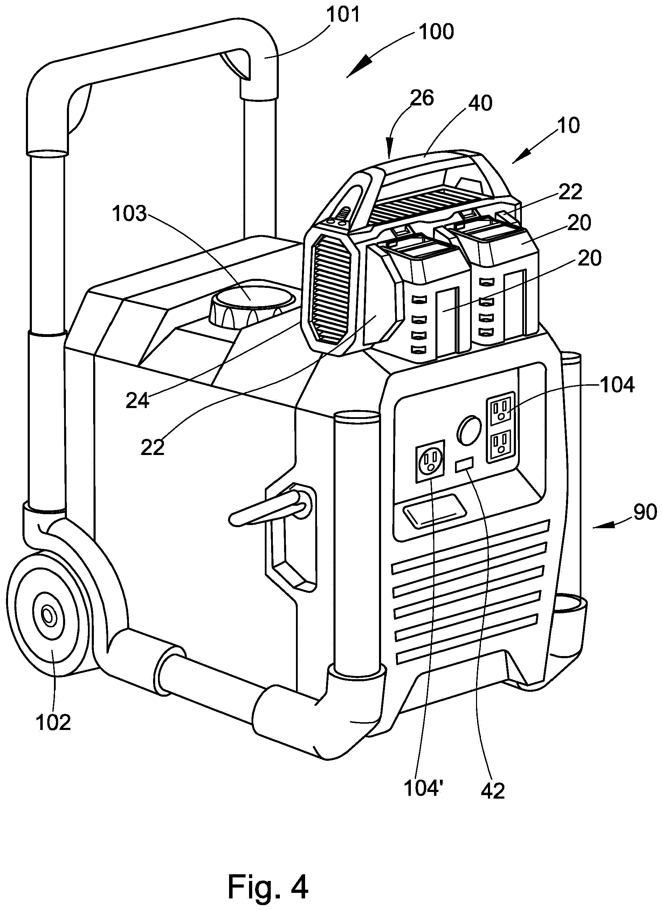

Fig. 4 shows a top perspective view of a power source, 90, which in this case is a generator, 100, having an electric battery charger, 10, thereupon. The electric battery charger, 10, is electrically-connected with the generator, 100, and may be formed either integrally with the generator, 100, or may be separable therefrom, as desired. In an embodiment herein, the electric battery charger is separable from the generator. The generator, 100, has a handle, 101, a set of wheels, 102, which allow easy transportation of the generator, 100. The generator, 100, also contains a fuel cap, 103, to allow refilling of the fuel tank (not shown).

The generator, 100, also contains an outlet, 104, or a plurality of outlets, 104. Such an outlet may be to provide the generator with power, 104', or for the generator to provide power, 104. In an embodiment herein, the generator contains a outlet for supplying power to the generator, and an outlet for the generator to supply power. In Fig. 4, it can also be seen that the generator, 100, contains a USB port, 42, as described above. In an embodiment herein, the generator contains multiple AC outlets and/or multiple USB ports.

The electric battery charger, 10, in Fig. 4 has an optional base unit handle, 40, which is especially useful if the electric battery charger, 10, is removable from the generator, 100. Otherwise, the electric battery charger, 10, is similar to that seen in Fig. 1, and contains a base unit, 24, to which is attached a charging cradle, 22. An electric battery, 20, is attached to the charging cradle, 22, for charging. The base unit, 24, also contains additional cradle recesses, 26, (not directly visible in Fig. 4 as they are on the back side of the base unit) which may be used to expand the charging capabilities of the electric battery charger, 10.

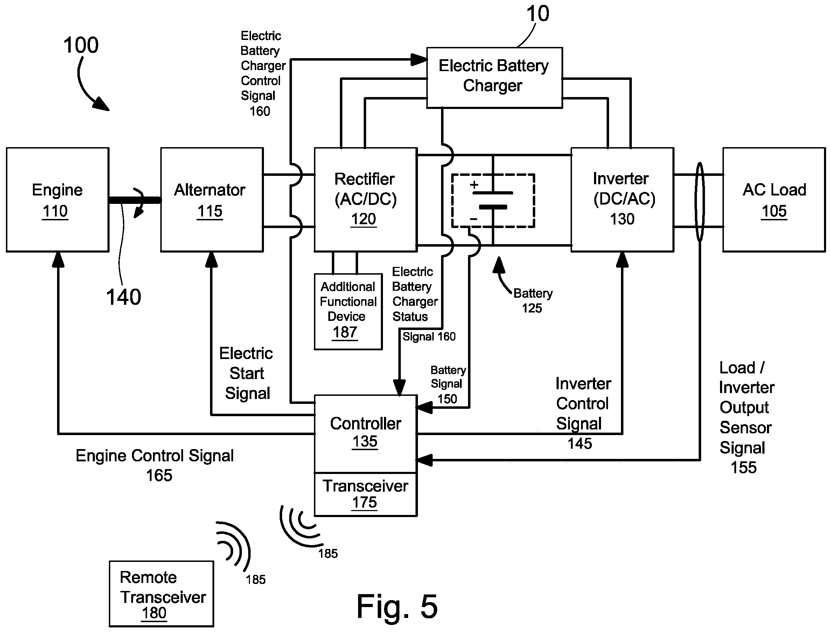

Fig. 5, depicts a circuit diagram of a generator, 100, preferably a hybrid inverter generator, coupled to an AC load, 105. The generator, 100, includes an engine, 110, an alternator, 115, a rectifier, 120, a battery, 125, an inverter, 130, and a controller, 135. The engine 110 may be, for instance, a gasoline-powered combustion engine that rotates an output shaft, 140, when enabled. The output shaft, 140, rotates a rotor of the alternator, 115. The rotating rotor induces an AC output from a stator of the alternator 115. The AC output by the alternator, 115, is received by the rectifier, 120.

The rectifier, 120, converts the AC power received from the alternator, 115, to DC power. The DC power is output from the rectifier, 120, to the inverter, 130, or the electric battery charger, 10. In the embodiment of Fig. 5, the battery, 125, and the electric battery charger, 10, are coupled in parallel between the rectifier, 120, and inverter, 130. That is, a positive terminal of the battery, 125, is coupled to a positive output of the rectifier, 120, and to a positive input of the inverter, 130, and a negative terminal of the battery, 125, is coupled to a negative output of the rectifier, 120, and to a negative input of the inverter, 130. Similarly, a positive terminal of the electric battery charger, 10, is coupled to a positive output of the rectifier, 120, and to a positive input of the inverter, 130, and a negative terminal of the electric battery charger, 10, is coupled to a negative output of the rectifier, 120, and to a negative input of the inverter, 130.

In Fig. 5, the inverter, 130, inverts the DC power received from one or both of the rectifier, 120, and battery, 125, to AC power using, for instance, high-speed switching elements controlled by the controller, 135, via an inverter control signal, 145.

The AC power output by the inverter, 130, is received by an AC load, 105. The AC load, 105, includes one or more AC-powered devices. The AC load, 105, may be coupled to the generator, 100, via, for instance, a two or three-prong AC outlet on an outer casing of the generator, 100. In some instances, the generator, 100, includes multiple AC outlets for separately coupling multiple AC loads, 105, to the generator, 100.

In the embodiment herein, the controller, 135, monitors the battery, 125, by receiving a battery signal, 150, and load demand of the AC load, 105, via a load/inverter output sensor signal, 155. The controller, 135, monitors the voltage level of the battery, 125, via the battery signal, 150. The controller, 135, also monitors the status of the electric battery charger, 10, by receiving electric battery charger status signal, 160. In some embodiments, the battery, 125, has internal circuitry for monitoring its own voltage level and outputs a signal representative of its voltage level to the controller, 135. In other embodiments, the controller, 135, directly measures the voltage and/or current level being output by the battery, 125, to determine the battery status, such as, for example, a signal relating to the the charge level, temperature, etc. The load demand of the AC load, 105, is determined by, for example, the controller, 135, monitoring the amount of current being drawn by the AC load, 105. The controller, 135, also monitors the voltage level and frequency of the AC power output by the inverter, 130.

The controller, 135, controls and is coupled to the engine, 110, via an engine control signal, 165, and alternator, 115, via an electric start signal, 170, which may be, for example, an electric start signal. The controller, 135, is operable to adjust, for example, a throttle of the engine, 110, to control the speed thereof. For instance, the throttle is controlled by sending control signals to a stepper motor or other device that receives electrical control signals and provides mechanical control of a throttle. Additionally, the controller, 135, controls the alternator, 115, to function as a starter motor for the engine, 110, to optionally start the engine without the use of a recoil starter. For instance, a starting circuit (not shown) coupling the battery, 125, and the alternator, 115, may be selectively enabled by the controller, 135, to provide power from the battery, 125, to the stator of the alternator, 115. The power received by the stator causes rotation of the rotor of the alternator, 115, which is coupled to the output shaft, 140, of the engine 110. Rotation of the output shaft, 140, along with opening the throttle to provide fuel to the engine, 110, enables starting of the engine, 110. In some embodiments, a pull or recoil starter or separate electric motor starter (not combined with the alternator) is provided in place of or in addition to the aforementioned electronic starting system.

In addition, in some embodiments, the controller, 135, includes a wireless communication chip (see Fig. 2 at 60) in the transceiver, 175, for receiving control signals from a remote transceiver, 180. The remote transceiver, 180, is operable to send/receive a control signal to/from the controller, 135, via the transceiver, 175. Example control signals, 185, include an on/off signal to selectively turn the inverter generator on and off, a sleep timer to turn off the inverter generator after a predetermined amount of time, etc. The control signals may also include information about the generator, 100, the electric battery charger, 10, the battery, 125, and/or the battery in the electric battery charger, 10.

The controller, 135, may include or be connected to a memory such as RAM and ROM and executes software that can be stored in the RAM (particularly during execution), the ROM (on a generally permanent basis), or another non-transitory computer readable medium such as other memory or disc. If necessary, the controller, 135, can be connected to such memory or a disc drive to read such software. In some embodiments, the controller, 135, is a microcontroller, microprocessor, field programmable gate array (FPGA), application specific integrated circuit (ASIC), and/or other programmable device with suitable memory and/or I/O devices.

In some embodiments, an additional functional device, 187, is operatively-connected to the power source, 90, which in Fig. 5 is the generator, 100. In this embodiment, the additional functional device, 187, is coupled to the rectifier, 120. However, one skilled in the art understands that such an additional functional device, 187, could alternatively be coupled to the inverter, 130, and/or the battery, 125, as appropriate. Such an additional functional device, 187, may include, for example, a wireless router, a fan, a radio, a charger, a light, and a combination thereof. Furthermore, one skilled in the art understands that the additional functional device, 187, may be connected to any or all of the AC output, or the DC output of the rectifier, 120, and/or the inverter, 130, and/or the DC output of the battery, 125, as desired and as appropriate.

In some instances, a DC-to-DC converter (not shown) is coupled between the DC load and the DC output of the rectifier, 120, and battery, 125, to condition the DC power to an appropriate level.

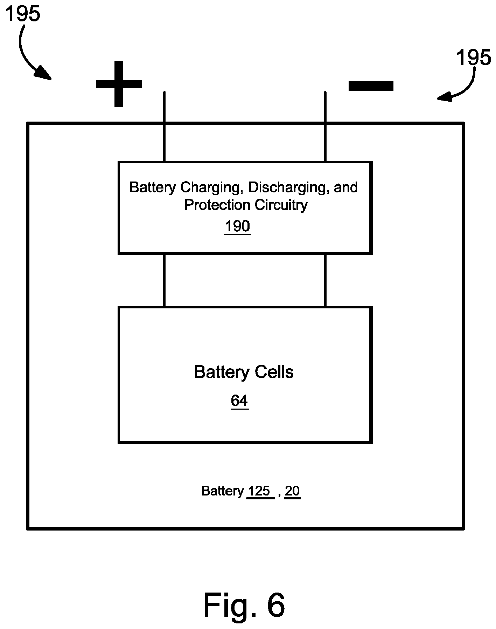

Fig. 6 depicts the battery, 125, or the electric battery, 20, in greater detail. The battery, 125, or electric battery, 20, includes one or more battery cells, 64, battery circuitry, 190, (e.g., battery charging circuitry, discharging circuitry, and/or protection circuitry and terminals 195. In some instances, the battery circuitry, 190, is external to the battery, 125, and/or electric battery, 20. In some cases, the battery circuitry, 190, is integrated with the controller, 135. In a generator of the present invention, the battery, 125, may include 45-60 lithium-ion battery cells, 64, generally outputting 180-300 V_{DC}, which may be removable in some embodiments. Since the battery, 125, has a relatively high DC output, the battery, 125, is coupled to the inverter, 130, without a boost circuit to boost the DC output of the battery 125, such as a DC/DC or DC/AC/DC power converter. Lithium-ion cells have a faster charging capability, a smaller size, and a better power-to-weight ratio relative to lead acid or Ni-Cad batteries. In other embodiments, however, the battery, 125, includes a different number of battery cells, a different type of battery cell, and a different voltage output. For instance, in some embodiments, lead acid, Ni-Cad, and other battery types are used to reduce costs. In some embodiments, if the battery, 125, outputs a lower DC output, a boost circuit may be used to increase the DC input to the inverter, 130. The battery circuitry, 190, includes charging circuitry for receiving DC power at the terminals, 195, and providing charging power to the battery cells, 64. The battery circuitry, 190, also includes discharging circuitry for providing DC power from the battery cells, 64, to the terminals, 195. The discharging circuitry may include temperature circuitry, charge circuitry, and/or filtering circuitry. Temperature circuitry and charge circuitry prevent the battery and/or the battery cells from either charging or discharging when the respective temperature or charge is not within an acceptable (typically pre-determined) range as determined by the battery and/or battery cell specifications. The filtering circuitry is provided to condition the output power to meet the acceptable range of particular voltage, current, safety, and noise specifications. The protection circuitry detects when the battery cells, 64, are at or within the acceptable range and prevents further discharge of the battery and/or battery cells when they are outside of the acceptable range. Preventing further discharge and/or charging prevents damage to the battery cells, 64.

The battery, 125, also stabilizes DC output from the rectifier, 120. In some embodiments, the generator, 100, includes a voltage regulator circuit (not shown) to provide additional regulation and stabilization of the DC output from the rectifier, 120. The voltage regulator circuit may be within the battery circuitry, 190, or outside the battery, 125.

The battery, 125, which may include one or more batteries coupled in series and/or in parallel, is coupled to the hybrid inverter generator, 100, using various techniques. For instance, in some embodiments, the battery, 125, is built into the generator such that it is non-modular and not removable by the user. For instance, the battery, 125, may be hard-wired to electrical terminals of the generator to prevent a user from removing the battery, 125, during general use (e.g., without cutting wires or breaking soldered connections).

In some embodiments, the hybrid inverter generator, 100, includes one or more charging cradles, 22, for selectively inserting one or more electric batteries, 20, into the generator circuit shown in Fig. 4. In some embodiments, a combination of one or more built-in batteries, 125, and selectively inserted batteries, 125. The option to selectively insert batteries, 125, enables a user to adjust the length of time that the hybrid inverter generator, 100, is able to run by battery power alone and enables a user to charge one or more batteries, 125, for other use (e.g., to provide power to battery-operated power tools).

The hybrid inverter generator, 100, uses the battery, 125, the engine, 110, and a combination thereof to generate and provide output power to the AC load, 105.

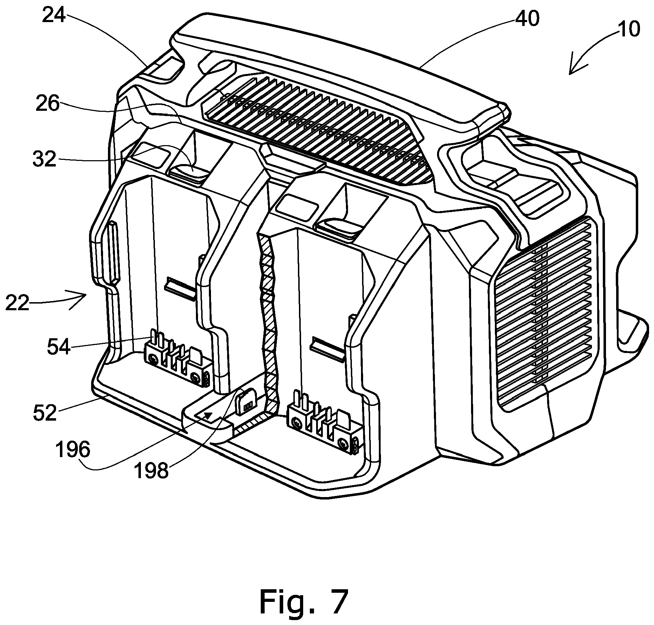

Fig. 7 shows a partially cut-away top perspective view of an embodiment of the invention. An electric battery charger, 10, contains a base unit, 24, having a handle, 40. The base unit, 24, also contains a cradle recess, 26, holding a charging cradle, 22. In this embodiment, the charging cradle is a dual charging cradle which contains space for two separate electric batteries (see Fig. 1 at 20). The charging cradle, 22, contains respective latches, 32, to eject the electric battery (see Fig. 1 at 20), cradle electrical contacts, 54, to charge the electric batteries (see Fig. 1 at 20), and cradle feet, 52, to provide stability.

In Fig. 7, part of the cradle, 22, is cut away to show that the charging cradle, 22, contains a device dock, 196, into which a mobile phone, tablet, or other device may be inserted. The device dock, 196, is sized and shaped such that a device, such as a mobile phone, may be placed therein while charging. This dock, 196, preferably contains a dedicated charging connector, 198, which may be, for example, a micro USB connector, a lightning connector, or other connector known in the art of mobile phones and devices. In an embodiment herein, the electric battery charger contains a dedicated charging connector. In an embodiment herein, this dedicated charging connector is removable and replaceable with another type of connector. In an embodiment herein the dedicated charging connector is a micro USB connector. In an embodiment herein the dedicated charging connector is a lightning connector.

The present invention also relates to a method of customizing an electric battery charger comprising the steps of providing a base unit, providing a charging cradle, providing an electric battery, removably-affixing the charging cradle to the base unit, and removably-affixing the electric battery to the charging cradle. The charging cradle may be removably-affixed to the base unit before, after, or substantially simultaneously with removably-affixing the electric battery to the charging cradle.

It is understood and specifically contemplated by the inventors that the different variations and features of the electric battery charger described herein may all be included individually and/or combined in any manner into the method herein.

It should be understood that the above only illustrates and describes examples whereby the present invention may be carried out, and that modifications and/or alterations may be made thereto without departing from the spirit of the invention.

It should also be understood that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. An electric battery charger comprising:
A. a base unit;
B. a charging cradle removably-affixable to the base unit; and
C. an electric battery removably-affixable to the charging cradle,
wherein from about 2 charging cradles to about 16 charging cradles, or from about 2 to about 12 charging cradles, or from about 2 charging cradles to about 8 charging cradles, or from about 3 charging cradles to about 4 charging cradles, may be attached to the base unit.

2. The electric battery charger according to Claim 1, wherein the base unit further comprises a control circuit.

3. The electric battery charger according to any previous claim, wherein the base unit further comprises a fan, and wherein the fan cools the battery charger.

4. The electric battery charger according to any preceding claim, further comprising a USB port; or from about 1 USB port to about 14 USB ports; or from about 2 USB ports to about 10 USB ports; or from about 3 USB ports to about 7 USB ports.

5. The electric battery charger according to any preceding claim, wherein the electric battery charger comprises a wireless communication device.

6. The electric battery charger according to any preceding claim, wherein the charging cradle further comprises a latch, optionally wherein the latch removably-affixes the charging cradle to the base unit or the electric battery.

7. The electric battery charger according to any preceding claim, wherein each charging cradle comprises an electric battery removably-affixed thereto.

8. The electric battery charger according to Claim 3, wherein the base unit comprises a base unit airflow pathway therein, wherein the base unit airflow pathway comprises the fan, wherein when operating the fan moves air through the base unit airflow pathway, wherein the charging cradle further comprises a cradle airflow pathway operatively-connected to the base unit airflow pathway, and wherein the fan further moves air through the cradle airflow pathway.

9. The electric battery charger according to any previous claim further comprising a dedicated charging connector.

10. A power source comprising the electric battery charger according to any preceding claim.

11. The power source according to Claim 10, wherein the power source performs a power conversion selected from the group consisting of AC to DC power conversion, AC to AC power conversion, DC to AC power conversion, DC to DC power conversion and a combination thereof.

12. The power source according to any of Claims 10-11, wherein the power source further comprises an inverter.

13. The power source according to any of Claims 10-12, further comprising an additional functional device operatively-connected to the power source.

14. An electric battery for the electric battery charger according to any preceding claim.

15. A method for customizing the electric battery charger according to any of the previous claims, comprising the steps of:
A. providing a base unit;
B. providing a charging cradle;
C. providing an electric battery;
D. removably-affixing the charging cradle to the base unit; and
E. removably-affixing the electric battery to the charging cradle,
wherein step (D) occurs before, after or substantially simultaneously with step (E).
